(19) Europäisches Patentamt
European Patent Office
Office européen des brevets

(11) **EP 4 657 115 A1**

(12) **EUROPEAN PATENT APPLICATION**

(43) Date of publication:
03.12.2025 Bulletin 2025/49

(21) Application number: 24178280.4

(22) Date of filing: 27.05.2024

(51) International Patent Classification (IPC):
*G01S 13/10* (2006.01) *G01S 7/292* (2006.01)

(52) Cooperative Patent Classification (CPC):
G01S 7/2921; G01S 13/103

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(71) Applicant: Vestel Elektronik Sanayi ve Ticaret A.S.
45030 Manisa (TR)

(72) Inventors:
• RAFIQUE, Saira
34810 Istanbul (TR)
• KIHERO, Abuu Bakari
34810 Istanbul (TR)
• ARSLAN, Hüseyin
34810 Istanbul (TR)

(74) Representative: Grünecker Patent- und Rechtsanwälte
PartG mbB
Leopoldstraße 4
80802 München (DE)

(54) **RANGE AMBIGUITY IDENTIFICATION AND ELIMINATION BY EXPLOITING TEMPORAL BROADENING EFFECT IN THZ-BAND PULSED RADAR**

(57) Some embodiments in the present disclosure relate to wireless sensing. A first radar pulse is transmitted and a second radar pulse is transmitted after the first radar pulse. A reflected pulse is received after the transmitting of the second radar pulse, wherein the reflected pulse is reflected by an object. A range of the object is obtained based on a temporal broadening of the reflected pulse.

Fig. 9

EP 4 657 115 A1

## Description

The present disclosure relates to wireless sensing. In particular, the present disclosure provides methods and apparatuses for range estimation using a sequence of radar pulses.

BACKGROUND

Wireless communication has been advancing over several decades now. Exemplary notable standards organizations include the 3rd Generation Partnership Project (3GPP) and IEEE 802.11, commonly referred to as Wi-Fi.

Future wireless devices are expected to be sensing capable, or at times, solely wireless sensors, to support communication applications and/or provide a wide range of other applications, such as fully immersive extended reality, improving quality of life by enabling smart environments, improving health-related applications through non-invasive tests and vital signs monitoring. The next generation of wireless communication networks may span a diverse array of applications such as traffic monitoring, intelligent transportation systems, autonomous vehicles, virtual reality and extended reality (VR and XR) that utilize sensing functionality in addition to conventional communication. Radar is an effective tool for wireless sensing that uses radio waves to determine distance, direction (azimuth and elevation angles), and radial velocity of objects.

SUMMARY

The present invention relates to methods and apparatuses for wireless sensing.

The invention is defined by the scope of independent claims. Some of the advantageous embodiments are provided in the dependent claims.

According to an embodiment, a method for wireless sensing is provided. The method comprises transmitting a first radar pulse and transmitting a second radar pulse after the first radar pulse, receiving a reflected pulse after the transmitting of the second radar pulse, wherein the reflected pulse is reflected by an object, and obtaining a range of the object based on a temporal broadening of the reflected pulse.

According to an embodiment, an apparatus for wireless sensing is provided. The apparatus comprises processing circuitry configured to transmit a first radar pulse and transmitting a second radar pulse after the first radar pulse, receive a reflected pulse after the transmitting of the second radar pulse, wherein the reflected pulse is reflected by an object, and obtain a range of the object based on a temporal broadening of the reflected pulse.

These and other features and characteristics of the presently disclosed subject matter, as well as the methods of operation and functions of the related elements of structures and the combination of parts and economies of manufacture, will become more apparent upon consideration of the following description and the appended claims with reference to the accompanying drawings, all of which form a part of this specification. It is to be expressly understood, however, that the drawings are for the purpose of illustration and description only and are not intended as a definition of the limits of the disclosed subject matter. As used in the specification and the claims, the singular form of "a," "an," and "the" include plural referents unless the context clearly dictates otherwise.

BRIEF DESCRIPTION OF DRAWINGS

An understanding of the nature and advantages of various embodiments may be realized by reference to the following figures.

Fig. 1    is a block diagram illustrating a basic communication system;

Fig. 2    is a block diagram illustrating a scheduling device with a plurality of wireless devices of various types;

Fig. 3    is a schematic drawing illustrating various frame format depending on whether the application generating the frame is sensing, communication of JSC;

Fig. 4a    is a schematic drawing illustrating a simple sensing scenarios in absence of objects to be detected;

Fig. 4b    is a schematic drawing illustrating a simple sensing scenarios in presence of objects to be detected;

Fig. 5a    is a schematic drawing illustrating a sensing scenario with multiple devices communicating and sensing via line of sight;

Fig. 5b    is a schematic drawing illustrating a sensing scenario with multiple devices communicating and sensing via non line of sight;

Fig. 6     is a time-intensity diagram illustrating reflected pulses received in a same pulse repetition interval as the corresponding transmitted pulse;

Fig. 7     is a time-intensity diagram illustrating reflected pulses received in a subsequent pulse repetition interval as the corresponding transmitted pulse;

Fig. 8     is a time-intensity diagram illustrating broadened reflected pulses received in a same pulse repetition interval as the corresponding transmitted pulse;

Fig. 9     is a time-intensity diagram illustrating broadened reflected pulses received in a next pulse repetition interval as the corresponding transmitted pulse;

Fig. 10    is a time-intensity diagram illustrating broadened reflected pulses received in a second next pulse repetition interval as the corresponding transmitted pulse;

Fig. 11    is a flowchart illustrating a first exemplary wireless sensing for obtaining a range estimate;

Fig. 12    is a flowchart illustrating a second exemplary wireless sensing for obtaining a range estimate;

Fig. 13    is a block diagram illustrating an exemplary apparatus for wireless sensing for obtaining a range estimate;

Fig. 14    is a block diagram illustrating an exemplary memory for wireless sensing for obtaining a range estimate.

## DETAILED DESCRIPTION

For purposes of the description hereinafter, the terms "end," "upper," "lower," "right," "left," "vertical," "horizontal," "top," "bottom," "lateral," "longitudinal," and derivatives thereof shall relate to the disclosed subject matter as it is oriented in the drawing figures. However, it is to be understood that the disclosed subject matter may assume various alternative variations and step sequences, except where expressly specified to the contrary. It is also to be understood that the specific devices and processes illustrated in the attached drawings, and described in the following specification, are simply exemplary embodiments or aspects of the disclosed subject matter. Hence, specific dimensions and other physical characteristics related to the embodiments or aspects disclosed herein are not to be considered as limiting unless otherwise indicated.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one." Furthermore, as used herein, the term "set" is intended to include one or more items (e.g., related items, unrelated items, a combination of related and unrelated items, and/or the like) and may be used interchangeably with "one or more" or "at least one." Where only one item is intended, the term "one" or similar language is used. Also, as used herein, the terms "has," "have," "having," or the like are intended to be open-ended terms. Further, the phrase "based on" is intended to mean "based at least partially on" unless explicitly stated otherwise.

Although the aforementioned techniques may be successful in some cases, they do not provide full information or awareness about the future spectrum or its usage. Meanwhile, wireless sensing is gaining popularity in commercial devices, for environment monitoring, health monitoring, and numerous other applications. Military use of wireless sensing such as radar has always been popular. Sensing applications generate signals, which may typically have a pattern different from those of some communication applications. For instance, most wireless sensing applications generate periodic signal transmissions of varying periodicity. However, not every signal is suitable for each scenario. Effectively adapting a frame format including sensing signals may result in less spectrum and power wastage.

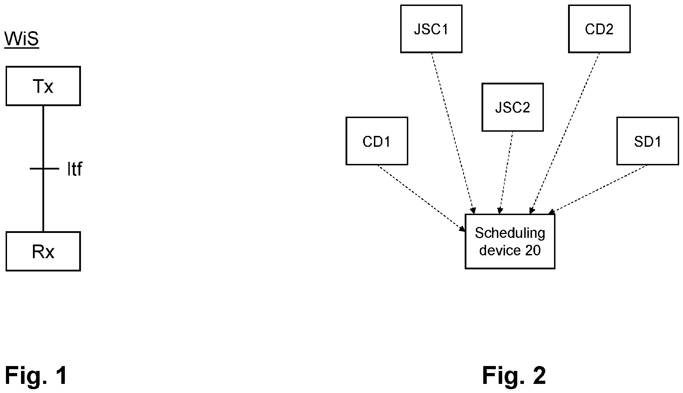

Fig. 1 illustrates an exemplary wireless system WiS in which Tx represents a transmitter and Rx represents a receiver of the wireless signal. The transmitter Tx is capable of transmitting a signal to the receiver Rx or to a group of receivers or to broadcast a signal over an interface Itf. The interface may be any wireless interface. The interface may be specified by means of resources, which can be used for the transmission and reception by the transmitter Tx and the receiver Rx. Such resources may be defined in one or more (or all) of the time domain, frequency domain, code domain, and space domain. It is noted that in general, the "transmitter" and "receiver" may be also both integrated into the same device. In other words, the devices Tx and Rx in Fig. 1 may respectively also include the functionality of the Rx and Tx.

The present disclosure is not limited to any particular transmitter Tx, receiver Rx and/or interface Itf implementation. However, it may be applied readily to some existing communication systems as well as to the extensions of such systems, or to new communication systems. Exemplary existing communication systems may be, for instance the 5G New Radio (NR) in its current or future releases, and/or the IEEE 802.11 based systems such as the recently studied IEEE 802.11 be or the like. The wireless signal is not necessarily a communication signal in the sense that it does not necessarily carry out human or machine communication. It may be, in particular, a sensing signal such as a radar signal or sounding a signal or any other kind of wireless signal from a sensing device such as some signal reporting sensing results to another device(s).

For instance, the amendment IEEE 802.11bf - Wireless Local Area Network (WLAN) Sensing - may include support for wireless sensing in WLAN networks. Some embodiments may be used to enhance the performance of devices complying with this standard, e.g. to reduce the amount of redundant sensing signals in an area or a network. The fifth-generation (5G) New Radio (NR) standard, 6G standards or other future standards may also apply wireless sensing as its part of future cellular communications networks. Some embodiments of the present disclosure may help to predict the empty spaces in the licensed-exempt spectrum during opportunistic spectrum usage, where most wireless sensing is expected to take place. The present disclosure is also applicable to other communication technologies such as 3G or communication technologies under long-term evolution (LTE)/LTE Unlicensed (LTE-U).

As mentioned above, spectrum awareness is an important part of cognitive radio (CR). Some embodiments of the present disclosure may facilitate the identification and prediction of sensing transmissions. The IEEE 802.22 and IEEE 802.15 standard support CR and may thus profit from the present disclosure. The present disclosure is also applicable to low-power wide-area network (LPWAN) technologies, as it aids in increasing power efficiency through reducing the number of redundant sensing transmissions. Thus, it is related to LPWAN standards such as Wize, ZigBee, NarrowBand IoT, and LoRaWAN. In general, some embodiments can be used in high frequencies - or millimeter waves (mm-waves) - as the spectrum availability and propagation characteristics are suitable for high-resolution wireless sensing. It can be used for managing resources for wireless sensing.

There may be separate devices including the functionality of the Rx and Tx, respectively. The transmitter Tx and receiver Rx may be implemented in any device such as a base station (eNB, AP) or terminal (UE, STA), or in any other entity of the wireless system WiS. A device such as a base station, access point, or terminal may implement both Rx and Tx. The present disclosure is not limited to any particular transmitter Tx, receiver Rx and/or interface Itf implementation. However, it may be applied readily to some existing communication systems as well as to the extensions of such systems, or to new communication systems. Exemplary existing communication systems may be, for instance, the 5G New Radio (NR) in its current or future releases, and/or the IEEE 802.11 based systems such as the recently studied IEEE 802.11be or the like. Sensing applications signals may also be embedded within resources provided by one or more or the known systems such as some IEEE 802.11 standards or their possible specific extensions for supporting sensing applications.

Future wireless devices are expected to be sensing capable, or at times, solely wireless sensors, to support communication applications and/or provide a wide range of other applications, such as fully immersive extended reality, improving quality of life by enabling smart environments, improving health-related applications through non-invasive tests and vital signs monitoring, and much more. Wireless sensing applications may require periodic or continuous sensing transmissions. However, allowing all sensing/sensing capable devices to transmit their own sensing transmissions may reduce spectral efficiency and degrade the performance of networks operating in the license-exempt bands. Additionally, because sensing transmissions are periodic, there is a strong likelihood that they will cause interference to communication transmissions if they are scheduled opportunistically, or if they have opportunistic channel access mechanisms. This problem can be solved by including sensing-aware channel access and sensing coordination protocols in the standards. However, these would only enable communication and coordination for sensing and devices within the same network. At the same time, this would increase control signalization overhead and complexity. Wireless communication trends are heading towards decentralized and minimum-coordination networks, with the coexistence of a larger number of wireless networks in the same area. As such, methods to identify and predict, or the act of identifying and predicting, future sensing transmissions before transmitting are required in the standards. This would allow devices to better allocate their resources and schedule their transmissions.

Wireless sensing is a process of obtaining information or awareness of the environment through measurements on received (e.g. reflected or directly received) electromagnetic signals. In this definition, processes such as spectrum/-channel sensing, radar, joint radar and communication, WLAN sensing, and other methods can be considered as wireless sensing methods. Most wireless sensing methods have either periodic or continuous transmission patterns. An example could be a radar, where a continuous signal or periodic pulses are transmitted. Another example could be channel state information (CSI) based WLAN sensing, where packets are transmitted with some periodicity.

For example, important signal characteristics for radar-based sensing may include periodicity, bandwidth, frequency, number of antennas and/or training sequences. In the CSI-based sensing, important signal characteristics may include, for example, periodicity, bandwidth, frequency and/or number of antennas.

The sensing transmissions may have a specific frame design or transmission mechanism, which is specific for some sensing application(s) and may vary based on the sensing application requirements and environment conditions. Periodicity is an important condition for sensing applications, as disruptions in the periodicity of transmitted/received signals due to interference from other devices, the inability to schedule transmissions, or access the channel using channel access protocols may cause a disruption of measurements. This may cause false alarms, missed detections, reduced resolution of sensed information, overall performance degradation of the sensing application. Depending on the application, this could have severe monetary consequences or life risks.

Signal identification allows devices to identify some features of a signal, such as wireless technology (LTE, 5G, etc.), waveform, modulation type, etc., based on some characteristics of the signals, such as bandwidth, spectrogram image, etc. There are some applications in which certain characteristics are identified for the purpose of synchronization or authentication. Also, spectrum sensing is known, which is used to identify primary users' spectrum occupancy status. However, it may require continuous spectrum sensing. Alternatively, spectrum prediction techniques can be used to save time, energy, and computation overheads required by spectrum sensing.

In future wireless communications, there may be several wireless sensing applications. Generally, sensing applications use continuous signals (with some periodicity), which may degrade the spectral efficiency drastically. This is especially the case where numerous sensing applications/devices are used at the same time and/or in the same area.

Scheduling of transmissions may be performed by a scheduling device 20, as shown in Fig. 2. The scheduling device 20 may receive a request for scheduling a transmission of a signal by a wireless device. The wireless device may be a communication device, a sensing device, or a joint sensing and communication (JSC) device. Fig. 2 shows a plurality of various devices to request resources for signal transmission from the scheduling device 20. In particular, the plurality of devices includes communication devices CD1 and CD2, JSC devices JSC1 and JSC2, as well as a sensing device SD1. In general, a communication device is a device configured to run an application, which makes use of wireless communication, such as a communication according to a wireless standard.

Sensing devices have wireless sensing functionality. They are configured to run a sensing application. These devices may be also configurable or configured to perform wireless communication to transmit their sensed measurements, which is typically a small amount of data compared to amounts of data transmitted by usual communication applications or devices. In the sensing, measurements are taken as the parameters (features) which can be extracted from the wireless signal received, whether directly or after some processing. Some non-limiting examples of measured parameters include received signal strength indicator (RSSI), channel state information (CSI), range, velocity, or the like.

JSC devices are configured to run both the communication application(s) and the sensing application(s). For example, the main function of the JSC devices may be communication, meaning they may have a large amount of data to transmit, but they can perform wireless sensing as well, to improve communication performance or for a user application, such as navigation, or the like. For example, the main function of the JSC devices may be sensing, but they can perform communication as well. The importance of sensing and communication may be equal.

Some non-limiting examples of sensing devices include smart bands, non-invasive medical sensors, such as heart rate monitors, body mass monitors, or the like. Non-limiting examples of applications supported (implemented) by JSC devices include object tracking and/or user tracking for beam management, physical layer security through physical user (human) identification, or the like. Non-limiting exemplary devices include cellphones, laptops, tablets, access points (APs), or the like.

*Wireless sensing applications and characteristics*

A sensing session may be composed of one or more of the following phases: setup phase, measurement phase, reporting phase, and termination phase. In the setup phase of a sensing session, a sensing session is established, and operational parameters associated with the sensing session are determined and may be exchanged between STAs. In the measurement phase of a sensing session, sensing measurements are performed. In the reporting phase of a sensing session, sensing measurement results are reported. In the termination phase of a sensing session, STAs stop performing measurements and terminate the sensing session.

When more than one independent device is involved in the sensing process (i.e. collaborative wireless sensing), sensing may be performed after some planning by the involved devices. An initiating station (ISTA) is the device which may initiates the wireless sensing process, generally by requesting some resources (transmissions, measurements, etc.) from other devices. A responding station (RSTA) may respond to the ISTA by transmitting sensing transmissions and/or making measurements on sensing signals transmitted by other RSTA and/or making spectrum measurements. These measurements may be communicated to the ISTA or some processor (which in turn will communicate the results of the sensing to the ISTA or sensing requesting application associated with the ISTA).

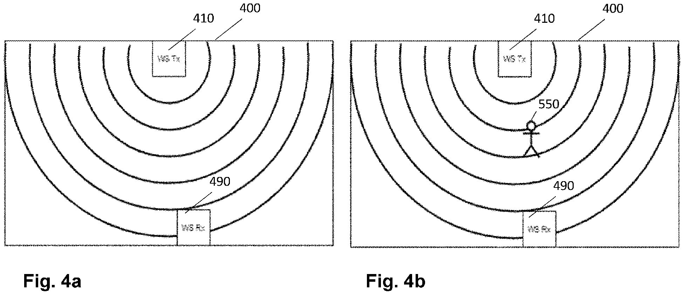

Fig. 4a and 4b show an illustration of a generic sensing application. Here, wireless sensor (WS) transmitter (Tx) 410 is the wireless sensor transmitter and WS receiver (Rx) 490 is the wireless sensor receiver. The WS Tx and WS Rx are synchronized, and may coordinate with each other, either through wireless signalization or via a wired connection. The WS Tx 410 and the WS Rx 490 are located in a limited area, such as a room 400. The concentric circle portions illustrate the electromagnetic field (wireless sensing signal) generated by the WS Tx 410. As can be seen in the figure, the WS Rx 490 is in the range of the wireless sensing signal. As discussed above, the wireless sensing signal may be a sensing pulse or continuous signal such as radar or a sounding signal. However, it may be also reporting of a regular measurement in a packet form or the like.

**Fig. 4a** is only an example configuration of wireless sensing hardware. Other configurations could include more than one transmitters and/or more than one receivers, transceivers, etc. Here, the term transceiver denotes a receiver or a transmitter or a combination of both. Initially, the WS Tx 410 may transmits the sensing signals when there is nothing to be detected (there is no object in the monitored object size range), as shown in Fig. 4a. The WS Rx 490 receives these sensing signals and takes measurements, for example, CSI or any signal strength indicating measurements. Then, when there is something to be detected, which is shown as a stick man 450 in **Fig. 4b,** the changes in the measurement indicates that. In other words, the presence of the object 450 changes the channel and thus, the received signal, which can be detected at WS Rx 490. It is noted that this is only an example in which there are cooperating transmitter and receiver WS. However, the present disclosure is not limited thereto and instead of detecting signal transmitted from a certain transmitter located in a position different from the position of the receiver, some sensing applications may rely on a transceiver including co-located transmitter and receiver, such as a pulse radar in which case the signal detected is a signal reflected from the detected object.

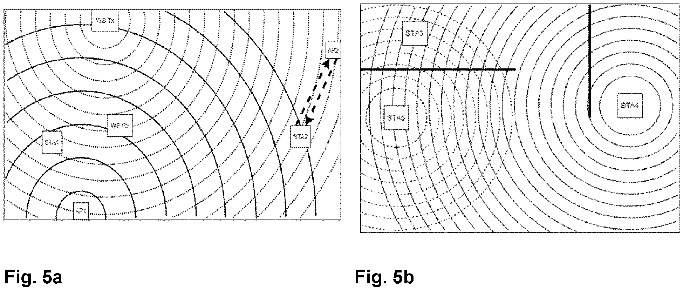

**Fig. 5a and 5b** show further different exemplary sensing scenarios. The different devices performing sensing and communication in the region can be solely sensing devices, shown as WS Tx and WS Rx. Alternatively, or in addition, the sensing may be performed between APs (or other network controllers/coordinators) and stations (STA)s, or between STAs and other STAs. At the same time, other network devices can be communicating. The sensing devices may be line of sight (LOS), as shown in Fig. 5, or non-line of sight (nLOS), as shown in Fig. 5b. For example, in Fig. 5, a WS Tx transmits a first sensing signal (dotted line). An AP1 transmits another sensing signal (solid line). STA1 may receive the sensing signal from the AP1 whereas WS Rx may receive the sensing signal from the WS Tx. However, the STA1 may also use the sensing signal from WS Tx and the WS Rx may also receive the sensing signal from the AP1 in some scenarios. Here, by receiving, what is meant is detecting as present and possibly processing further, i.e. not merely receiving as a part of noise. Moreover, AP2 and STA2 are in communication with each other, i.e. exchange communication signal. All these devices are in LoS in this simplified example. Some or all of these devices may operate in the same or at least partially overlapping spectrum.

As shown in the figures, the sensing signals may have different periodicity (indicated by different density of the concentric circle portions illustrating the sensing signal). In this case, identifying the sensing applications without direct communication or coordination with another wireless device may be beneficial. In response to the detection of a sensing signal, the devices can use signals, which are suitable for them rather than transmitting their own sensing signals. For example, once the STA1 detects that WS Tx is transmitting a sensing signal, it may use the sensing signal in addition or alternatively to the sensing signal from the AP1. It is even possible that AP1 detects sensing signal from WS Tx and stops transmitting own sensing signal, since one sensing signal may be sufficient. Or, vice versa, WS Tx detects that AP1 transmits a sensing signals and stops own transmission of the sensing signal. As is clear to those skilled in the art, various implementations of coordination and adaption of the sensing environment may be provided once the sensing applications (signals from sensing applications) have been detected in an area.

Fig. 5b shows a scenario in which there is not necessarily a LoS between some or all of the devices. In the figure, in fact none of the devices STA3, STA4, and STA5 present in the sensing area has a LoS to the other devices. Nevertheless, still, sensing signals may be received at the sensing signal receiving devices. E.g. STA5 has no LoS to STA3 and STA4, but may still receive their sensing signal. Thus, STA5 may decide to switch off the own signal and use the sensing signal of STA4 or STA3 or the like. Using the sensing application identification and prediction technique discussed above, devices can learn which sensing application the signals are for, predict their duration and future spectrum usage and either schedule their own signals such that there is no interference (resource allocation) or utilize these signals for their own sensing application.

In the above description, some particular examples were given. However, the present disclosure is not limited to those examples. Rather, variations and modifications may be advantageous for some scenarios. For example, any features that are different for sensing and communication signals can be used to differentiate them, such as frame structure, periodicity, resolution, RSS/RSSI values, or some features of the sensing that will be defined in the future standards, such as periodic channel access mechanisms, back-off behavior, special sensing sequences or waveforms, or the like. The RSS/RSSI can be used instead of PSD for detecting spectrum occupancy and/or for measurement of the signal to determine whether it is a communication or a sensing signal or to determine the sensing application, which originated said signal. For example, the RSS/RSSI measurement is available effortlessly in most communication devices and can give a rough quantification of user activity, i.e., spectrum usage. The term "user" here refers more broadly to a particular application running on a device.

Some embodiments of the present disclosure may be used for applications such as home surveillance or home appliances or entertainment.

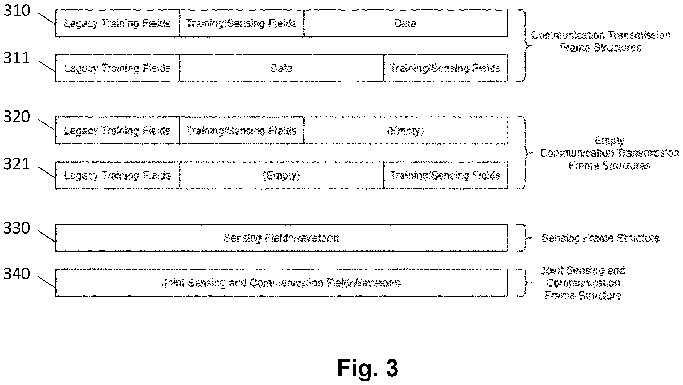

Different sensing applications may require different characteristics of the sensing signal. Some characteristics of the signal are, for example, bandwidth (BW), sensing duration, sensing start time, sensing end time, waveform, periodicity, carrier frequency, power, beam width, beam sweep rate, training sequences, pilot placement, or the like. Exemplary frame structures such as communication transmission frame structures 310, 311, empty communication frame structures 320, 321, sensing frame structures 330 and joint sensing and communication frame structures 340 are shown in **Fig. 3.**

There may be numerous communicating devices in all frequency bands. Exemplary scenarios may include (Mobile) Autonomous Vehicles, (Stationary) Roadside Units, Home Monitoring, Sleep Monitoring, Gesture Recognition, or the like.

There may be one or more features, which enable distinction between the applications. It is noted that the above example is fictional, and that the measurement values may vary. Said distinct features may include number of transmitters and/or receivers, waveform, frequency, bandwidth, and/or periodicity. It is noted that these five features (number of transmitters and/or receivers, frame structure / waveform, carrier frequency, bandwidth, and periodicity) are only exemplary here. In general, depending on the desired resolution for the sensing application identification, one or more of these five features and/or any other feature capable of distinguishing (or contributing to the distinction) between sensing applications may be used. In exemplary and non-limiting implementations, the features may be required as mentioned above.

*Identification of sensing signals*

Signal characteristics and or sensing applications may be identified based on (blind signal analysis) BSA techniques and/or using predefined tags and/or a set of rules or the like.

Features of a signal out of the existing sensing signals may be identified by machine learning (ML) algorithms.

A ML-based approach may include two stages, which are referred to as training and testing. In the training stage, a dataset may be collected, and the ML model may be configured and trained. Then, in the testing stage, the features of existing sensing signals may be learned. These stages are detailed below.

For example, instead or in combination with the trained (e.g. ML / DL) module, other kind of methods such as statistical methods or deterministic methods may be employed for the estimation. For example, if it is observed that a signal is repeating periodically, ML or DL methods may not be necessary to detect presence of such sensing signal. It can be determined deterministically whether sensing is taking place or not. In a blind signal analysis (BSA) a received signal may be analyzed regarding its characteristics such as frequency, bandwidth, periodicity or the like. A blind signal analysis may take into account, for example, time domain related features such as received signal strength indication, complementary cumulative distribution function (CCDF), peak to average power ratio (PAPR), duty cycle, frame/burst length. A blind signal analysis may further take into account, for example, frequency domain related features such as bandwidth or carrier frequency. Further characteristics used in a BSA may be cyclostationarity-based features of the signal such as spectral correlation and cyclic features, statistical properties such as autocorrelation function properties, variance, mean, cumulants, and moments (2nd, 3rd, etc.) or multi-carrier parameters of the signal in the time domain (cyclic prefix (CP) duration, symbol duration) and the frequency domain (number of subcarriers, subcarrier spacing). Characteristics used in BSA may further include chip rates, symbol rates, the angle of arrival, a distinction between single-carrier or multi-carrier, a distinction between spread spectrum or narrowband, a hopping sequence or a type of modulation and its order.

Similarly, for sensing application identification, given a predefined set of features and their values for particular applications, identification may be performed. Still further, where sensing applications use specific header information for detecting network types, this or other header information may be detected and used deterministically to determine the identification of an application. There may be the drawback of defining the parameters (features and their values) and application sets for each environment. Thus, depending on the deployment scenario, trained modules may provide better results, for example in more complex scenarios, where deterministic or stochastic distinction is difficult or complex.

Identification or prediction may be made with MAC Layer Protocols or PHY Layer (like with BSA methods), or using some tags (like coding), identification or prediction may be made in Network Layer or even maybe in upper layers of the Open Systems Interconnection (OSI) model. Also, there may be no need to identify applications. Application identification may not be enough to understand signal characteristics since the environment characteristics may be changed and devices that receive the signal may be different. It may be impossible to have a complete list for all sensing applications. Thus, applications themselves or applications and environments may be grouped/classified based on their similarities, or requirements of the application may be determined by the request of the corresponding wireless system in the setup phase.

*Pulsed-Doppler radar*

A pulsed-Doppler radar transceiver transmits a train (sequence) of pulses and analyses the received echo signals to estimate potential target's parameters (range and Doppler).

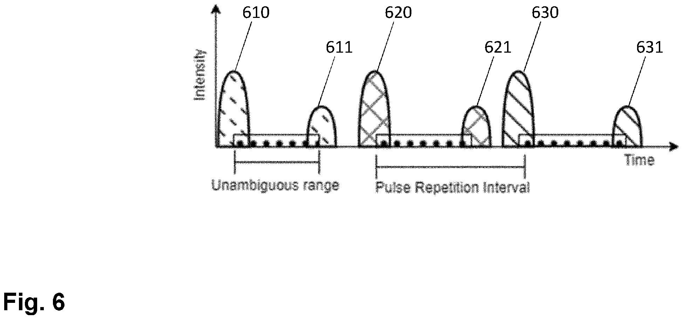

**Fig. 6** exemplarily illustrates a timing of transmitted sequence of radar pulses 610, 620, and 630. Each pair of consecutive pulses is separated in time by a pulse repetition interval.

The maximum range up to which a pulsed-Doppler radar may detect an object correctly depends on the transmit power and duration of the transmitted pulses. Any object beyond this distance creates range ambiguity at the radar transceiver, because the delay of the echoes resulting from distant targets can be larger than the pulse repetition interval (PRI).

In Fig. 6, the exemplary reflected pulses 611, 621, and 631 are received within the PRI of the respective transmitted pulses 610, 620, and 630. In other words, a first transmitted pulse 610 is reflected by an object in the surroundings of the transmitter. The receiver in the example of Fig. 6 receives a first received pulse 611, which corresponds to a reflection of the first transmitted pulse, before the transmitter transmits a second transmitted pulse. Thus, the first reflected pulse 611 in the example of Fig. 6 corresponds unambiguously to a reflection of the first transmitted pulse.

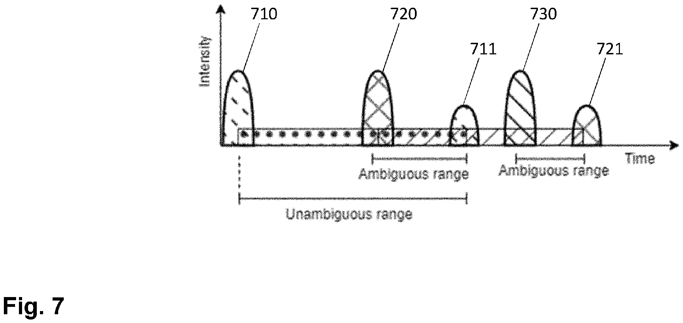

However, due to the presence of distant objects, a received reflection of a pulse may not be received within the same/intended PRI. A reflection of a pulse may be received in a subsequent PRI, which causes ambiguity in range calculation. Such a scenario is indicated in Fig. 7.

**Fig. 7** exemplarily illustrates a timing of transmitted sequence of radar pulses 710, 720, and 730. Each pair of consecutive pulses is separated in time by a pulse repetition interval. A first reflected pulse 711 is received after the transmission of the second transmitted pulse 720. A second reflected pulse 721 is received after the transmission of the third transmitted pulse 730.

This causes an ambiguous range as the received pulse 711 may correspond to a reflection of the first pulse 710 from a distant object, or the received pulse 711 may correspond to a reflection of the second pulse 720 from a close object. For the second received pulse 721, there is a similar ambiguous range with respect to the second transmitted pulse 720 and the third transmitted pulse 730.

For instance, a decrease in pulse repetition frequency (PRF) may accommodate radar returns from farther objects and increase the maximum unambiguous range. However, decreasing the PRF compromises the Doppler accuracy of the targets. Low-PRF systems are more susceptible to Doppler ambiguity, especially in scenarios with high target velocities or when multiple targets with different velocities are present within the radar beam. Doppler ambiguity can result in inaccuracies or errors in velocity measurement, particularly for targets with velocities close to or exceeding half of the PRF.

*Range Ambiguity Identification and Elimination*

As mentioned above, distant targets may cause a range ambiguity. Thus, it may be desirable to reliably identify and/or eliminate range ambiguity.

The next generation of wireless communication networks strive to deliver high-throughput (of the order of terabit/sec) communication as well as prioritize the provision of sensing information with cm-level accuracy. However, such high-resolution sensing requirement is constrained by a bandwidth bottleneck, which requires the transition towards higher carrier frequencies including the terahertz (THz) band. Such a THz band ranges, for example, from 0.1-10 THz. Although, THz band with its abundant bandwidth fulfils the requirement of high-resolution sensing; it is coupled with several challenging propagation mechanisms that may affect the sensing performance. In contrast to the frequencies below 6 GHz, THz frequencies suffer from additional losses according to Friis free space power equation. Additionally, certain propagation mechanisms specific to THz band such as molecular absorption, temporal broadening effect (TBE), and scattering and reflection losses may also contribute to short coverage regions and additional losses. However, THz channel characteristics may be exploited for sensing. Temporal broadening refers to the phenomenon where the duration of a radar pulse increases over time. This may occur due to various factors, such as the dispersion of the radar signal in a medium.

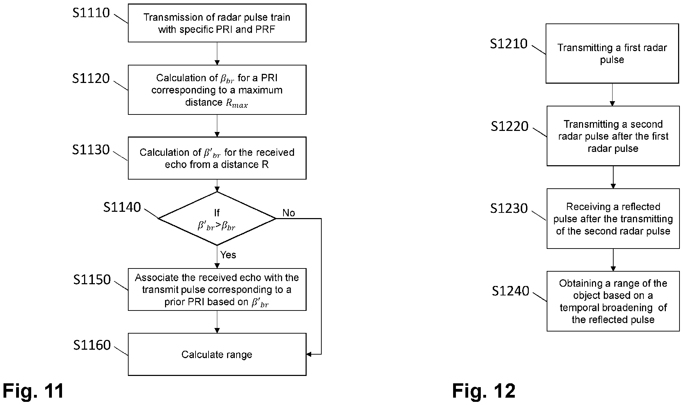

In the following, a method for wireless sensing is explained. The steps of the method are exemplarily illustrated in the flowchart of **Fig. 12.** A sequence of two or more radar pulses is transmitted. In particular, a first radar pulse is transmitted S1210. A second radar pulse is transmitted after the first radar pulse S1220. In other words, at least two radar pulses are transmitted sequentially.

The transmitted pulse train (sequence) may be expressed as

$$x(t) = \sum_{k=0}^{K-1} x_k(t - k\tau), \quad 0 \leq t \leq K\tau$$

Where $\tau \gg \frac{1}{B}$ is the pulse repetition interval (PRI), *K* is the number of PRIs for each *coherent processing*

*interval* (CPI) and $x_k(t)$ is the waveform transmitted over the $k^{th}$ PRI with the bandwidth $B$. Additionally, let $T_p < T$ denote the radar pulse duration.

The transmitted signal $x_k(t)$ for the $k^{th}$ PRI may be written as

$$x_k(t) = \begin{cases} \sqrt{P_r}p(t), & 0 \le t \le T_p \\ 0, & T_p < t \le T \end{cases}, \ k = 0, \cdots, K - 1,$$

where $P_r$ represents radar transmit power and p(t) denotes basic radar pulse having bandwidth $B$ with the normalized power $\frac{1}{T_p}\int_0^{T_p} |p(t)|^2 \, \mathrm{d}t = 1$. Moreover, the ratio $\rho = \frac{T_p}{T}$ is known as the duty cycle. The basic radar pulse p(t) may be a rectangular pulse given by

$$p(t) = rect\left(\frac{t}{T_P}\right) = \begin{cases} 1, & 0 \le t \le T_p \\ 0 & otherwise \end{cases}$$

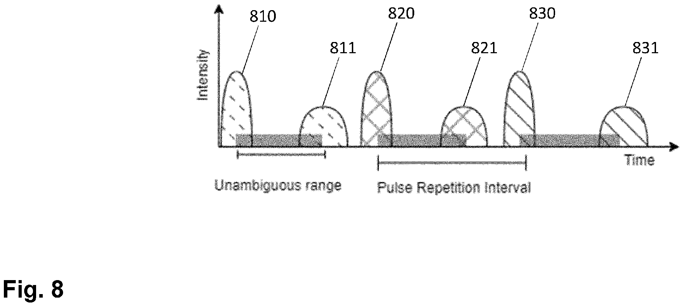

**Fig. 8** exemplarily illustrates a sequence of three radar pulses 810, 820, and 830 in a time-intensity diagram.

A reflected pulse is received S1230 after the transmitting of the second radar pulse, wherein the reflected pulse is reflected by an object. In the example of Fig. 8, if radar pulse 810 is considered as a first radar pulse, a reflected radar pulse 821 is received after the transmitting of the second radar pulse 820.

A range of the object is obtained S1240 based on a temporal broadening of the reflected pulse. For example, a velocity of the object may be obtained based on the reflected pulse in addition to the range of the object. Such a range corresponds to a range estimate based on the received reflection of a transmitted pulse.

After interaction with the target, the received radar echo at the receiver within one CPI may be written as

$$y(t) = \tilde{\alpha}x(t - \tau_d)e^{j2\pi f_d(t-\tau_d)} + n(t), \ 0 \le t \le K\tau',$$

Where $\tilde{\alpha}$ is the complex channel coefficient of the reflected path by the radar target; $\tau_d$ is the two-way propagation delay which is used for range calculation given by $r = c\tau_d/2$; $f_d = \frac{2v_d}{\lambda}$ is the Doppler frequency shift induced by the motion of the target with the radial velocity $v_d$, where $\lambda$ being the carrier wavelength and $n(t)$ denotes additive white Gaussian noise (AWGN), which is assumed to be a circularly symmetric complex Gaussian (CSCG) random process, following $n(t) \sim \mathcal{CN}(0, N_0)$, with $N_0$ representing the noise power spectrum density (PSD).

In the THz frequency region, the transmitted pulses undergoes a temporal broadening effect (TBE) as a consequence of molecular absorption, which depends on the following factors: frequency, distance, and environment. For a given (fixed) frequency and environment, the temporal broadening is proportional to the distance between the transceiver and the radar target (object). Based on said broadening the received reflected pulse may be assigned to one pulse out of a sequence of transmitted pulses.

Temporal broadening is exemplarily illustrated in Fig. 8. For example, a reflected pulse 811, which corresponds to a reflection of the transmitted pulse 810, has an increased duration and a reduced intensity compared to the transmitted pulse 810.

For example, the reflected pulse may correspond to a reflection of the transmitted first radar pulse. For example, the reflected pulse may correspond to a reflection of the transmitted second radar pulse. Thus, a range ambiguity based on the timing of the reflected pulse arises as explained above in section *Pulsed-Doppler radar* with respect to Fig. 7.

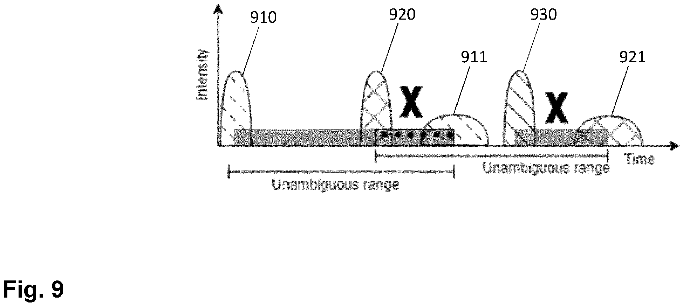

**Fig. 9** illustrates a sequence of pulses 910, 920, and 930 in a time-intensity diagram, wherein a reflection 911 of the first pulse 910 is received after a transmitting of a second pulse 920.

In the example of Fig. 8, the reflected pulse 821, which is received after the transmission of the second pulse 820, corresponds to a reflection of the second pulse 820 by a radar target.

In order to obtain the range of the object, it may be determined, based on the temporal broadening of the reflected pulse, whether the reflected pulse is a reflection of the first radar pulse. As the temporal broadening is proportional to the distance, the temporal broadening of the received pulse may indicate to which transmitted pulse the reflected pulse corresponds.

For example, the reflection 911 of the first pulse in Fig. 9, which is received after the transmission of a subsequent pulse 920, shows an increased temporal broadening compared to the reflection 811 of the first pulse in Fig. 8, which is received before the transmission of a subsequent pulse 820. For this comparison, a same pulse repetition interval and a same pulse frequency are assumed. For this comparison, the exemplary scenarios differ in the distance of the object (radar target).

The temporal broadening of the reflected pulse may be compared to a first threshold. The first threshold may based on a temporal broadening in a first pulse repetition interval. Such a first pulse repetition interval may correspond to an interval between the first pulse and the second pulse. Such an interval corresponds to a time interval. For example, Fig. 8 illustrates a pulse repetition interval between the transmitted pulses 820 and 830.

A pulse repetition interval is related to a maximum unambiguous range of the first pulse: Any object beyond this distance creates range ambiguity at the radar transceiver, because the delay of the echoes resulting from distant targets may be larger than the pulse repetition interval (PRI).

A temporal broadening may be given by broadening factor, a duration of received echo signal, or any other suitable parameter. A broadening factor may be based on a ratio of a duration of the received reflection and a duration of a corresponding transmitted pulse.

A parameter for the temporal broadening may be defined as temporal broadening factor $\beta_{br}$. For a given frequency and environment, the temporal broadening factor $\beta_{br}$ may be directly proportional to the distance between the transceiver and the radar target. Therefore, a broadened echo is received, hence the duration of the received echoed signal $\tau'$ is greater than the transmitted pulse $\tau$, such that $\tau' > \tau$.

Within a single PRI, broadening factor may be defined as,

$$\beta_{br} = \tau' / \tau.$$

In other words, in the obtaining of the range, a broadening factor describing the temporal broadening may be obtained, the broadening factor corresponding to a ratio of a duration of the received reflected pulse and a duration of a transmitted pulse.

The determining, whether the reflected pulse is a reflection of the first radar pulse, may include assigning the reflected pulse to the first radar pulse for obtaining the range of the object, if the temporal broadening is higher than the first threshold.

In other words, if the duration of the received reflected pulse exceeds a predetermined first threshold, the reflected pulse is assigned to the first transmitted pulse in order to obtain a range of the radar target. Such a duration may be expressed by a broadening factor, which takes into account a ration of the ratio of a duration of the received reflection and a duration of a corresponding transmitted pulse.

In case the reflected pulse is assigned to the first transmitted pulse, the obtaining of the range is further based on the assigning of the reflected pulse to the first radar pulse. For example, such an assigning of a transmitted pulse and its reflection facilitates the obtaining of a two-way propagation delay, which is used for range calculation.

Such an association is illustrated in Fig. 9. As a target is located or moves beyond a maximum unambiguous range, the echoes (reflections) 911 and 921 may not return within the intended PRI, which may lead to an erroneous range calculation. The echo received in the subsequent PRI has the broadening factor $\beta'^{k}_{br}$ ($k$ represents the current PRI where the echo is received) greater than $\beta_{br}$ which was obtained for the maximum unambiguous range and hence it may be identified that this echo does not belong within the same PRI and it is associated with the previously transmitted pulse based on its current broadening factor.

The determining further may further include assigning the reflected pulse to the second radar pulse for obtaining the range of the object, if the temporal broadening is lower than the first threshold. In case the reflected pulse is assigned to the second transmitted pulse, the obtaining of the range is further based on the assigning of the reflected pulse to the second radar pulse.

Such an association is illustrated in Fig. 8, where the target echoes 811, 821, and 831 are received within the same PRI containing the transmitted pulse 810, 820, and 830, respectively.

Such a predetermined first threshold may be based on a temporal broadening of a received pulse, which has been reflected by a radar target located at the maximal unambiguous range of a transmitted pulse. The first threshold may correspond to a broadening factor related to the first pulse repetition interval. Such a threshold may be calculated. Alternatively or in addition, such a threshold may be determined by transmitting a pilot pulse.

In particular, a pilot pulse may be transmitted. A reference value for a temporal broadening may be obtained based on the pilot pulse in order to obtain at least one threshold for comparing a temporal broadening of the reflected pulse.

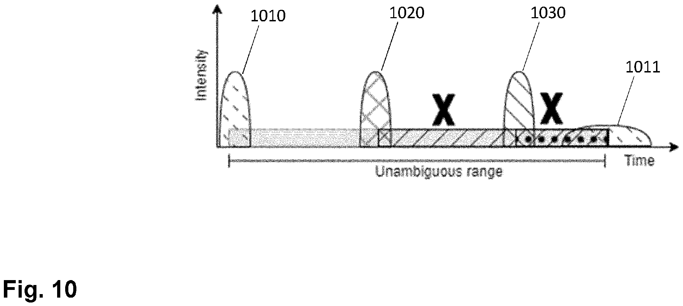

**Fig. 10** illustrates an exemplary configuration in which a reflected pulse 1011 is received after the transmitting of the second radar pulse 1030. In the sequence of transmitted pulses including the first pulse 1020 and the second pulse 1030, there is transmitted a third pulse 1010 before transmitting the first pulse.

In such a scenario according to Fig. 10, it may be determined whether the reflected pulse is a reflection of the first radar pulse, the second radar pulse or the third radar pulse.

The temporal broadening of the reflected pulse 1011 may be compared to a second threshold. The second threshold is based on a temporal broadening in a second pulse repetition interval. The second pulse repetition interval may correspond to an interval between the third pulse 1010 and the second pulse 1030.

The reflected pulse 1011 may be assigned to the third radar pulse 1010 for obtaining the range of the object, if the temporal broadening is higher than the second threshold.

The reflected pulse 1011 may be assigned to the first radar pulse 1020 for obtaining the range of the object, if the temporal broadening is higher than the first threshold and lower than the second threshold.

In other words, if the duration of the received reflected pulse exceeds a predetermined second threshold, the reflected pulse is assigned to the third transmitted pulse in order to obtain a range of the radar target. Such a duration may be expressed by a broadening factor, which takes into account a ration of the ratio of a duration of the received reflection and a duration of a corresponding transmitted pulse.

Since for a fixed carrier frequency and environment, $\beta_{br}$ may be directly proportional to the distance, a broadened echo in the example of Fig. 10 may have a broadening factor approximately twice the value of $\beta_{br}$ obtained for the case as exemplarily depicted in Fig. 9, due to the larger distance. Hence, the echo (reflected pulse) will be associated with transmitted pulse corresponding to $(k\text{-}2)^{th}$ PRI where $k$ represents the current PRI including the echo signal. Based on the broadening factor of the received pulse, it is associated with the transmitted pulse residing in the corresponding PRI thereby eliminating range ambiguity. The amount by which a pulse is broadened determines the PRI with which it is associated.

Such a predetermined second threshold may be calculated. Alternatively or in addition, such a predetermined second threshold may be determined by transmitting a pilot pulse. The second threshold may correspond to a broadening factor related to the second pulse repetition interval.

Any of the first radar pulse, the second radar pulse or the third radar pulse may be a radar pulse in a terahertz, THz, band. As mentioned above, such a THz band may include a frequency range of 0.1 THz to 10 THz.

For instance, a distance-dependent temporal broadening effect of THz band may be analysed in a THz pulsed-Doppler radar and the broadened received echoed pulses may be associated with their corresponding transmitted pulses based on the predefined maximum temporal broadening experienced by the echo pulses within a pulse repetition interval.

The distance-dependent temporal broadening effect in the THz band may facilitate associating a received pulse reflected from a target with its corresponding transmitted pulse. Based on the maximum unambiguous range, the maximum amount of pulse broadening may be estimated within a pulse repetition interval (PRI). Therefore, for a received echo exceeding the maximum amount of pulse broadening for a PRI, it is not associated with the transmitted pulse within the same PRI to avoid range ambiguity; rather it may be associated with the appropriate transmitted pulse based on the pulse broadening it undergoes.

In an exemplary implementation, a monostatic radar sensing considers transmitting a classic half duplex pulsed waveform where the monostatic radar switches between pulse transmission and echo reception. The radar receiver may be switched off during transmission time to avoid the interference.

The temporal broadening effect of the THz band facilitates a correct association of the received echo pulse with the transmitted pulse in a mono static radar system. It may also be applied to bistatic radars. Moreover, the same approach may be applied to multi-target scenarios where different values of pulse broadening may be exploited to identify the distances of multiple objects.

To correctly identify and localize targets, the echo should be received within the intended PRI. The PRI is usually designed based on the maximum distance $R_{max}$ between the transmitter and the target and consequently $\beta_{br}$ for a given PRI may be calculated based on the maximum unambiguous range. However, if the target is mobile and moves the distance R beyond maximum unambiguous range such that $> R_{max}$, the target echo may not return within the intended PRI and it may be received after the transmission of next pulse. Consequently, ambiguous range may be calculated.

In the THz range, the target returns experience TBE; therefore as the distance of the target/object increases beyond the maximum unambiguous range from the radar transceiver, the received echo may be broadened more than the intended broadening value calculated for a single PRI such that

$$\beta'^{k}_{br} > \beta^{k-1}_{br}$$

where k represents the PRI. Therefore, based on the pulse broadening factor of the echo pulse, it may be correctly associated with the transmitted pulse and range ambiguity may be eliminated. For any target return whose broadening factor exceeds the predefined value calculated for the maximum unambiguous range, will not be associated within the same PRI.

Additionally, the amount by which the broadening factor increases defines that the association of echo signal with the corresponding transmitted pulse.

**Fig. 11** provides a flowchart for an exemplary implementation of wireless sensing according to the above-described method. For example, a radar pulse train having a specific PRI and PRF is transmitted S1110. A radar pulse train corresponds to a sequence of radar pulses. The sequence of radar pulses includes two or more radar pulses. Said radar pulses may have frequencies in the THz band.

A broadening factor $\beta_{br}$ may be calculated S1120 for a PRI corresponding to a maximum distance $R_{max}$. Such a maximum distance corresponds to a maximum unambiguous range as explained above with respect to Figs. 8 and 9. Said broadening factor $\beta_{br}$ is a reference broadening factor.

For a received echo (reflected pulse) from a distance $R$, the broadening factor $\beta'_{br}$ is calculated S1130. In other words, one pulse out of the radar pulse train is reflected by an object located at a distance $R$ in a surrounding area of the transmitter transmitting the radar pulse train.

If the broadening factor $\beta'_{br}$ is greater than the reference broadening factor $\beta_{br}$ (Yes in S1140), the received echo is associated S1150 with the transmit pulse corresponding to a prior PRI based on $\beta'_{br}$. Based on the association, the range is calculated S1160.

If the broadening factor $\beta'_{br}$ is smaller than the reference broadening factor $\beta_{br}$ (No in S1140), the range of the object is calculated in S1160. In other words, the received echo is associated with the transmit pulse corresponding to a current PRI. Based on the association, the range is calculated.

*Implementations in software and hardware*

It is noted that although embodiments and examples of the present disclosure were provided in terms of a method above, the corresponding devices providing the functionality described by the methods are also provided. Moreover, it is noted that any of the steps described above may be included as code instructions in a program, which may be executed by one or more processors.

For example, a device is provided for wireless sensing. The device may comprise a processing circuitry, which is configured to perform steps according to any of the above-mentioned methods. The device may further comprise a transceiver for performing wireless reception, transmission or sensing. Alternatively to the transceiver, the processing circuitry may control an external transceiver to perform wireless reception, transmission or sensing. The processing circuity may receive signals from a transceiver and/or may transmit signals to a transceiver. In other words, the processing circuitry may instruct the transceiver to receive and/or transmit signals.

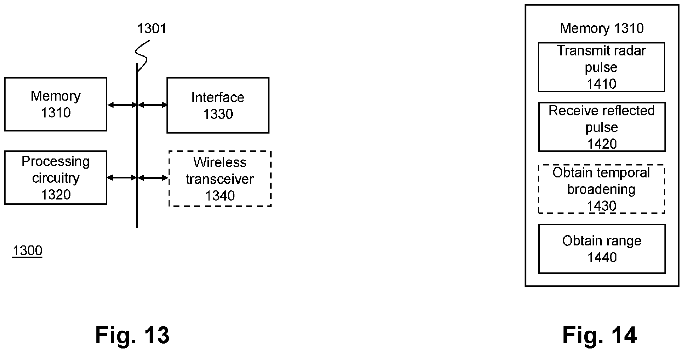

**Fig. 13** shows an exemplary device 1300, which may implement some embodiments of the present disclosure. For example, the device may be the device for wireless sensing. Such a device may include memory 1310, processing circuitry 1320, a wireless transceiver 1340, and possibly a user interface 1330. The device may be, for instance a (part of) a base station or a terminal/STA, or another device as mentioned above.

The memory 1310 may store the program, which may be executed by the processing circuitry 1320 to perform steps of any of the above-mentioned methods. The processing circuitry may comprise one or more processors and/or other dedicated or programmable hardware. The wireless transceiver 1340 may be configured to receive and/or transmit wireless signals. The transceiver 1340 may include also baseband processing which may detect, decode and interpret the data according to some standard or predefined convention. However, this is not necessary and devices with only sensing applications may implement only the lower one or two protocol layers. For example, the transceiver may be used to perform measurement, communicate with other devices such as base stations and/or terminals. The device 1300 may further include a user interface 1330 for displaying messages or status of the device, or the like and/or for receiving a user's input. A bus 1301 interconnects the memory, the processing circuitry, the wireless transceiver, and the user interface.

**Fig. 14** shows an example of the memory 1310 in a wireless device 1300 for wireless sensing, including a module 1410 for transmitting a radar pulse, a module 1420 for receiving a reflected pulse, an optional module 1430 for obtaining a temporal broadening, and a module 1440 for obtaining a range (estimate). These modules 1410-1440 may be fetched from the memory and executed by the processing circuitry 1320.

The above examples are not to limit the present disclosure. There are many modifications and configurations, which may be used in addition or alternatively, as will be briefly described below.

Fig. 14 provides an exemplary implementation. A memory 1310 may include a subset of the described modules or additional modules to provide instructions to perform any of the methods described in the sections above.

This present disclosure can be used in any kind of device that is used for wireless sensing. For instance, health monitoring, activity classification, gesture recognition, people counting, through the wall sensing, emotion recognition, attention monitoring, keystrokes recognition, drawing in the air, imaging, step counting, speed estimation, sleep detection, traffic monitoring, smoking detection, metal detection, sign language recognition, humidity estimation, wheat moisture detection, fruit ripeness detection, sneeze sensing, etc. Besides these applications, the embodiments of the present disclosure can be used in JSC technologies. This disclosure can also be used for sensing applications to support communication applications, like obstacle tracking for beam management. Therefore, devices that can utilize this invention could be smart homes/offices/cities/factories/etc. devices, like electrical kitchen appliances, television sets, smart bus stops, smart office equipment (printers, etc.), lighting systems, WLAN and WiFi devices, etc. Other devices could be stand-alone wireless sensors, such as heart-rate monitors, motion detectors, smart watches, etc. Besides these applications, the invention can be used for military services such as enemy sensors, the existence of enemy devices and what they are sensing can be learned and some precaution can be taken. This disclosure can especially be used in network controllers and managing devices, such as APs, BSs, edge nodes, enhanced nodes, etc. for technologies such as CR, reconfigurable radio systems, etc.

The methodologies described herein may be implemented by various means depending upon the application. For example, these methodologies may be implemented in hardware, operation system, firmware, software, or any combination of two or all of them. For a hardware implementation, any processing circuitry 1320 may be used, which may include one or more processors. For example, the hardware may include one or more of application specific integrated circuits (ASICs), digital signal processors (DSPs), digital signal processing devices (DSPDs), programmable logic devices (PLDs), field programmable gate arrays (FPGAs), processors, controllers, any electronic devices, or other electronic circuitry units or elements designed to perform the functions described above.

If implemented as program code, the functions performed by the transmitting apparatus (device) may be stored as one or more instructions or code on a non-transitory computer readable storage medium such as the memory 1310 or any other type of storage. The computer-readable media includes physical computer storage media, which may be any available medium that can be accessed by the computer, or, in general by the processing circuitry 1320. Such computer-readable media may comprise RAM, ROM, EEPROM, optical disk storage, magnetic disk storage, semiconductor storage, or other storage devices. Some particular and non-limiting examples include compact disc (CD), CD-ROM, laser disc, optical disc, digital versatile disc (DVD), Blu-ray (BD) disc or the like. Combinations of different storage media are also possible - in other words, distributed and heterogeneous storage may be employed.

The embodiments and exemplary implementations mentioned above show some non-limiting examples. It is understood that various modifications may be made without departing from the claimed subject matter. For example, modifications may be made to adapt the examples to new systems and scenarios without departing from the central concept described herein.

*Selected embodiments and examples*

Summarizing, some embodiments in the present disclosure relate to wireless sensing. A first radar pulse is transmitted and a second radar pulse is transmitted after the first radar pulse. A reflected pulse is received after the transmitting of the second radar pulse, wherein the reflected pulse is reflected by an object. A range of the object is obtained based on a temporal broadening of the reflected pulse.

According to an embodiment, a method for wireless sensing is provided, the method comprising: transmitting a first radar pulse and transmitting a second radar pulse after the first radar pulse, receiving a reflected pulse after the transmitting of the second radar pulse, wherein the reflected pulse is reflected by an object, and obtaining a range of the object based on a temporal broadening of the reflected pulse.

In an exemplary implementation, the obtaining of the range includes determining, based on the temporal broadening of the reflected pulse, whether the reflected pulse is a reflection of the first radar pulse.

For example, the obtaining of the range includes comparing the temporal broadening of the reflected pulse to a first threshold, wherein the first threshold is based on a temporal broadening in a first pulse repetition interval, the first pulse repetition interval corresponding to an interval between the first pulse and the second pulse.

In an exemplary implementation, the determining further includes assigning the reflected pulse to the first radar pulse for obtaining the range of the object, if the temporal broadening is higher than the first threshold, and the obtaining of the range is further based on the assigning of the reflected pulse to the first radar pulse.

For example, the determining further includes assigning the reflected pulse to the second radar pulse for obtaining the range of the object, if the temporal broadening is lower than the first threshold, and the obtaining of the range is further based on the assigning of the reflected pulse to the second radar pulse.

In an exemplary implementation, the transmitting further includes transmitting a third radar pulse before transmitting the first radar pulse, the obtaining of the range includes comparing the temporal broadening of the reflected pulse to a second threshold, wherein the second threshold is based on a temporal broadening in a second pulse repetition interval, the second pulse repetition interval corresponding to an interval between the third pulse and the second pulse, assigning the reflected pulse to the third radar pulse for obtaining the range of the object, if the temporal broadening is higher than the second threshold, assigning the reflected pulse to the first radar pulse for obtaining the range of the object, if the temporal broadening is higher than the first threshold and lower than the second threshold.

For example, a radar pulse is a pulse in a terahertz, THz, band, the radar pulse being the first, second or third radar pulse.

In an exemplary implementation, in the obtaining of the range, a broadening factor describing the temporal broadening is obtained, the broadening factor corresponding to a ratio of a duration of the received reflected pulse and a duration of a transmitted pulse.

For example, the first threshold corresponds to a broadening factor related to the first pulse repetition interval and/or the second threshold corresponds to a broadening factor related to the second pulse repetition interval.

In an exemplary implementation, the method further comprises transmitting a pilot pulse, and obtaining a reference value for a temporal broadening based on the pilot pulse in order to obtain at least one threshold for comparing a temporal broadening of the reflected pulse.

For example, a computer program stored in a non-transitory, computer-readable medium is provided, the program comprising code instructions which, when executed on one or more processors, cause the one or more processors to perform steps of the method according to any of the methods above.

According to an embodiment, an apparatus for wireless sensing is provided, the apparatus comprising processing circuitry configured to transmit a first radar pulse and transmitting a second radar pulse after the first radar pulse, receive a reflected pulse after the transmitting of the second radar pulse, wherein the reflected pulse is reflected by an object, and obtain a range of the object based on a temporal broadening of the reflected pulse.

In an exemplary implementation, the processing circuitry is further configured, in the obtaining of the range, to determine, based on the temporal broadening of the reflected pulse, whether the reflected pulse is a reflection of the first radar pulse.

For example, the processing circuitry is further configured, in the obtaining of the range, to compare the temporal broadening of the reflected pulse to a first threshold, wherein the first threshold is based on a temporal broadening in a first pulse repetition interval, the first pulse repetition interval corresponding to an interval between the first pulse and the second pulse.

In an exemplary implementation, the processing circuitry is further configured, in the determining, to assign the reflected pulse to the first radar pulse for obtaining the range of the object, if the temporal broadening is higher than the first threshold, and the obtaining of the range is further based on the assigning of the reflected pulse to the first radar pulse.

For example, the processing circuitry is further configured, in the determining, to assign the reflected pulse to the second radar pulse for obtaining the range of the object, if the temporal broadening is lower than the first threshold, and the obtaining of the range is further based on the assigning of the reflected pulse to the second radar pulse.

In an exemplary implementation, the processing circuitry is further configured to transmit a third radar pulse before transmitting the first radar pulse, in the obtaining of the range, compare the temporal broadening of the reflected pulse to a second threshold, wherein the second threshold is based on a temporal broadening in a second pulse repetition interval, the second pulse repetition interval corresponding to an interval between the third pulse and the second pulse, assign the reflected pulse to the third radar pulse for obtaining the range of the object, if the temporal broadening is higher than the second threshold, and assign the reflected pulse to the first radar pulse for obtaining the range of the object, if the temporal broadening is higher than the first threshold and lower than the second threshold.

For example, a radar pulse is a pulse in a terahertz, THz, band, the radar pulse being the first, second or third radar pulse.

In an exemplary implementation, the processing circuitry is further configured, in the obtaining of the range, to obtain a broadening factor describing the temporal broadening, the broadening factor corresponding to a ratio of a duration of the received reflected pulse and a duration of a transmitted pulse.

For example, the first threshold corresponds to a broadening factor related to the first pulse repetition interval and/or the second threshold corresponds to a broadening factor related to the second pulse repetition interval.

In an exemplary implementation, the processing circuitry is further configured to transmit a pilot pulse, and obtain a reference value for a temporal broadening based on the pilot pulse in order to obtain at least one threshold for comparing a temporal broadening of the reflected pulse.

Moreover, the corresponding methods are provided including steps performed by any of the above-mentioned processing circuitry implementations.

Still further, a computer program is provided, stored on a non-transitory medium, and comprising code instructions which when executed by a computer or by a processing circuitry, performs steps of any of the above-mentioned methods.

According to some embodiments, the processing circuitry and/or the transceiver is embedded in an integrated circuit, IC.

Any of the apparatuses of the present disclosure may be embodied on an integrated chip.

Any of the above-mentioned embodiments and exemplary implementations may be combined.

Although the disclosed subject matter has been described in detail for the purpose of illustration based on what is currently considered to be the most practical and preferred embodiments, it is to be understood that such detail is solely for that purpose and that the disclosed subject matter is not limited to the disclosed embodiments, but, on the contrary, is intended to cover modifications and equivalent arrangements that are within the spirit and scope of the appended claims. For example, it is to be understood that the presently disclosed subject matter contemplates that, to the extent possible, one or more features of any embodiment can be combined with one or more features of any other embodiment.

**Claims**

1. A method for wireless sensing comprising:

   transmitting a first radar pulse and transmitting a second radar pulse after the first radar pulse,
   receiving a reflected pulse after the transmitting of the second radar pulse, wherein the reflected pulse is reflected by an object,
   obtaining a range of the object based on a temporal broadening of the reflected pulse.

2. The method according to claim 1, wherein the obtaining of the range includes determining, based on the temporal broadening of the reflected pulse, whether the reflected pulse is a reflection of the first radar pulse.

3. The method according to any of the claims 1 to 2, wherein the obtaining of the range includes comparing the temporal broadening of the reflected pulse to a first threshold, wherein the first threshold is based on a temporal broadening in a first pulse repetition interval, the first pulse repetition interval corresponding to an interval between the first pulse and the second pulse.

4. The method according to claim 3, wherein the determining further includes assigning the reflected pulse to the first radar pulse for obtaining the range of the object, if the temporal broadening is higher than the first threshold, and the obtaining of the range is further based on the assigning of the reflected pulse to the first radar pulse.

5. The method according to claim 3, wherein the determining further includes assigning the reflected pulse to the second radar pulse for obtaining the range of the object, if the temporal broadening is lower than the first threshold, and the obtaining of the range is further based on the assigning of the reflected pulse to the second radar pulse.

6. The method according to any of the claims 1 to 5, wherein the transmitting further includes transmitting a third radar pulse before transmitting the first radar pulse,

   the obtaining of the range includes comparing the temporal broadening of the reflected pulse to a second threshold, wherein the second threshold is based on a temporal broadening in a second pulse repetition interval, the second pulse repetition interval corresponding to an interval between the third pulse and the second pulse,
   assigning the reflected pulse to the third radar pulse for obtaining the range of the object, if the temporal broadening is higher than the second threshold,
   assigning the reflected pulse to the first radar pulse for obtaining the range of the object, if the temporal broadening is higher than the first threshold and lower than the second threshold.

7. The method according to any of the claims 1 to 6, wherein a radar pulse is a pulse in a terahertz, THz, band, the radar pulse being the first, second or third radar pulse.

8. The method according to any of the claims 1 to 7, wherein in the obtaining of the range, a broadening factor describing the temporal broadening is obtained, the broadening factor corresponding to a ratio of a duration of the received reflected pulse and a duration of a transmitted pulse.

9. The method according to claim 8, wherein the first threshold corresponds to a broadening factor related to the first pulse repetition interval and/or the second threshold corresponds to a broadening factor related to the second pulse repetition interval.

10. The method according to any of the claims 1 to 9, further including

   transmitting a pilot pulse,
   obtaining a reference value for a temporal broadening based on the pilot pulse in order to obtain at least one threshold for comparing a temporal broadening of the reflected pulse.

11. A computer program stored in a non-transitory, computer-readable medium, the program comprising code instructions which, when executed on one or more processors, cause the one or more processors to perform steps of the method according to any of claims 1 to 10.

12. An apparatus for wireless sensing, comprising:
processing circuitry configured to

transmit a first radar pulse and transmitting a second radar pulse after the first radar pulse,
receive a reflected pulse after the transmitting of the second radar pulse, wherein the reflected pulse is reflected by an object,
obtain a range of the object based on a temporal broadening of the reflected pulse.

13. The apparatus according to claim 12, wherein the processing circuitry is further configured, in the obtaining of the range, to compare the temporal broadening of the reflected pulse to a first threshold, wherein the first threshold is based on a temporal broadening in a first pulse repetition interval, the first pulse repetition interval corresponding to an interval between the first pulse and the second pulse.

14. The apparatus according to claim 13, wherein the processing circuitry is further configured, in the determining, to assign the reflected pulse to the first radar pulse for obtaining the range of the object, if the temporal broadening is higher than the first threshold, and
the obtaining of the range is further based on the assigning of the reflected pulse to the first radar pulse.

15. The apparatus according to any of the claims 12 to 14, wherein the processing circuitry is further configured to

transmit a third radar pulse before transmitting the first radar pulse,
in the obtaining of the range, compare the temporal broadening of the reflected pulse to a second threshold, wherein the second threshold is based on a temporal broadening in a second pulse repetition interval, the second pulse repetition interval corresponding to an interval between the third pulse and the second pulse,
assign the reflected pulse to the third radar pulse for obtaining the range of the object, if the temporal broadening is higher than the second threshold, and
assign the reflected pulse to the first radar pulse for obtaining the range of the object, if the temporal broadening is higher than the first threshold and lower than the second threshold.

WiS

Tx

Itf

Rx

Fig. 1

JSC1

CD2

JSC2

CD1

SD1

Scheduling device 20

Fig. 2

| 310 | Legacy Training Fields | Training/Sensing Fields | Data | } Communication Transmission Frame Structures |
| 311 | Legacy Training Fields | Data | Training/Sensing Fields | |

| 320 | Legacy Training Fields | Training/Sensing Fields | (Empty) | } Empty Communication Transmission Frame Structures |
| 321 | Legacy Training Fields | (Empty) | Training/Sensing Fields | |

| 330 | Sensing Field/Waveform | } Sensing Frame Structure |

| 340 | Joint Sensing and Communication Field/Waveform | } Joint Sensing and Communication Frame Structure |

# Fig. 3

**Fig. 4a**

**Fig. 4b**

Fig. 5a

Fig. 5b

**Fig. 6**

**Fig. 7**

**Fig. 8**

Fig. 9

**Fig. 10**

S1110 — Transmission of radar pulse train with specific PRI and PRF

S1120 — Calculation of $\beta_{br}$ for a PRI corresponding to a maximum distance $R_{max}$

S1130 — Calculation of $\beta'_{br}$ for the received echo from a distance R

S1140 — If $\beta'_{br} > \beta_{br}$ — No

Yes

S1150 — Associate the received echo with the transmit pulse corresponding to a prior PRI based on $\beta'_{br}$

S1160 — Calculate range

**Fig. 11**

S1210 — Transmitting a first radar pulse

S1220 — Transmitting a second radar pulse after the first radar pulse

S1230 — Receiving a reflected pulse after the transmitting of the second radar pulse

S1240 — Obtaining a range of the object based on a temporal broadening of the reflected pulse

**Fig. 12**

1301

Memory
1310

Interface
1330

Processing
circuitry
1320

Wireless
transceiver
1340

1300

## Fig. 13

Memory 1310

Transmit radar
pulse
1410

Receive reflected
pulse
1420

Obtain temporal
broadening
1430

Obtain range
1440

## Fig. 14

**EP 4 657 115 A1**

Europäisches Patentamt
European Patent Office
Office européen des brevets

# EUROPEAN SEARCH REPORT

**Application Number**

EP 24 17 8280

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2017/363715 A1 (LI LIHUA [US] ET AL) 21 December 2017 (2017-12-21) * paragraphs [0023] - [0026], [0047]; figure 1 * | 1-15 | INV. G01S13/10 G01S7/292 |
| A | US 2019/094339 A1 (MCCAUGHEY DENNIS [US] ET AL) 28 March 2019 (2019-03-28) * paragraphs [0021], [0049], [0059]; figures 1,6 * | 1-15 | |
| A | MANDEHGAR MAHBOUBEH ET AL: "Dispersion compensation of the THz communication channels in the atmosphere", 2015 40TH INTERNATIONAL CONFERENCE ON INFRARED, MILLIMETER, AND TERAHERTZ WAVES (IRMMW-THZ), IEEE, 23 August 2015 (2015-08-23), pages 1-2, XP032805687, DOI: 10.1109/IRMMW-THZ.2015.7327833 [retrieved on 2015-11-11] * the whole document * | 1-15 | |

**TECHNICAL FIELDS SEARCHED (IPC)**

G01S

The present search report has been drawn up for all claims

| Place of search | Date of completion of the search | Examiner |
|---|---|---|
| Munich | 26 September 2024 | Schmelz, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

28

## ANNEX TO THE EUROPEAN SEARCH REPORT
## ON EUROPEAN PATENT APPLICATION NO.

EP 24 17 8280

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2024

| Patent document cited in search report | Publication date | Patent family member(s) | Publication date |
|---|---|---|---|
| US 2017363715 A1 | 21-12-2017 | NONE | |
| US 2019094339 A1 | 28-03-2019 | US 2016274218 A1<br>US 2019094339 A1 | 22-09-2016<br>28-03-2019 |

EPO FORM P0459

For more details about this annex : see Official Journal of the European Patent Office, No. 12/82